(19) Europäisches Patentamt / European Patent Office / Office européen des brevets

(11) **EP 4 072 245 A1**

(12) **EUROPEAN PATENT APPLICATION**

(43) Date of publication:
**12.10.2022 Bulletin 2022/41**

(21) Application number: **21166892.6**

(22) Date of filing: **06.04.2021**

(51) International Patent Classification (IPC):
**H05B 45/325** (2020.01)    **H05B 45/382** (2020.01)
**H05B 45/345** (2020.01)    **H05B 45/14** (2020.01)
**H05B 45/39** (2020.01)    **H02M 1/00** (2006.01)

(52) Cooperative Patent Classification (CPC):
**H05B 45/382; H02M 1/0022; H02M 1/0025;
H02M 3/33523; H05B 45/14; H05B 45/325;
H05B 45/345; H05B 45/39**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Tridonic GmbH & Co. KG
6851 Dornbirn (AT)**

(72) Inventors:
• **Egle, Manuel
  6850 Dornbirn (AT)**
• **Netzer, Harald
  6850 Dornbirn (AT)**

(74) Representative: **Rupp, Christian
Mitscherlich PartmbB
Patent- und Rechtsanwälte
Sonnenstraße 33
80331 München (DE)**

(54) **ADAPTIVE IN-SERVICE MITIGATION OF LIGHT FLICKER**

(57)    Disclosed is a driver (1) for an LED load. The driver (1) comprises a DC/DC converter (103) configured to provide a DC output current (21, $I_{LED}$) for the LED load in dependence of a DC bus voltage (26, $V_{BUS}$) and a duration of a switching period (28, $T_{HB}$) of the DC/DC converter (103). The driver (1) further comprises a control unit (106, 109) configured to perform a feedback control of a nominal duration of the switching period (25, $T_{HB\_ctrl}$) of the DC/DC converter (103) in dependence of a target value (23, $L_{LED\_avg\_target}$) for the DC output current (21, $I_{LED\_avg}$); perform a feedforward control of the duration of the switching period (28, $T_{HB}$) of the DC/DC converter (103) in dependence of the nominal duration of the switching period (25, $T_{HB\_ctrl}$), the DC bus voltage (26, $V_{BUS}$) and a feedforward gain ($\Delta T_{HB}/\Delta V_{BUS}$); and determine the feedforward gain ($\Delta T_{HB}/\Delta V_{BUS}$) by a variation of the DC bus voltage (26, $V_{BUS}$). The driver (1) is capable of performing adaptive in-service mitigation of light flicker.

FIG. 2

EP 4 072 245 A1

# Description

## Technical Field

The present disclosure relates to lighting technology, and in particular to a driver for an LED load and a lighting system comprising these two.

## Background Art

Typical multi-stage LED drivers convert an AC input voltage into a DC bus voltage such as 400V, which forms a basis for a supply of a constant DC output current for an LED load.

A known issue of such LED drivers is that the DC bus voltage may pick up undesirable noise components such as a residual 100Hz ripple arising from rectification of the 50Hz AC input voltage and/or noise originating from an DALI power supply integrated into the LED driver. These noise components translate into corresponding noise components of the DC output current and thus into light flicker issues.

In order to mitigate the light flicker spectrum, the relatively slow feedback control of the DC output current may be accompanied by a relatively fast feedforward control that enables an immediate response to fluctuations of the DC bus voltage.

Such a feedforward control is based on a feedforward gain which describes an extent of change of a switching period of the LED driver for a given change of the DC bus voltage in order to maintain a constant DC output current. Yet the feedforward gain may vary between different operating points, which may emerge in connection with dimming adjustments, for example.

## Summary

The object of the present disclosure is to provide a driver for an LED load which is capable of performing adaptive in-service mitigation of such light flicker.

The invention is defined by the appended independent claims. Preferred embodiments are set forth in the dependent claims and in the following description and drawings.

A first aspect of the present disclosure relates to a driver for an LED load. The driver comprises a DC/DC converter configured to provide a DC output current for the LED load in dependence of a DC bus voltage and a duration of a switching period of the DC/DC converter. The driver further comprises a control unit configured to perform a feedback control of a nominal duration of the switching period of the DC/DC converter in dependence of a target value for the DC output current; perform a feedforward control of the duration of the switching period of the DC/DC converter in dependence of the nominal duration of the switching period, the DC bus voltage and a feedforward gain; and determine the feedforward gain by a variation of the DC bus voltage.

The control unit may further be configured, so as to determine the feedforward gain by the variation of the DC bus voltage, to: determine the feedforward gain by a variation of the DC bus voltage in response to a variation of the target value for the output current.

The control unit may further be configured, so as to determine the feedforward gain by the variation of the DC bus voltage, to: measure a first average value of the duration of the switching period of the DC/DC converter at a first nominal value of the DC bus voltage over a given plurality of the duration of the switching period; measure a second average value of the duration of the switching period of the DC/DC converter at a second nominal value of the DC bus voltage that differs from the first nominal value over the given plurality of the duration of the switching periods; and determine the feedforward gain as a differential quotient of the difference of the first and second average values of the duration of the switching period and the difference of the first and second nominal values of the DC bus voltage.

The difference of the first and second nominal values of the DC bus voltage may comprise up to 1/80, and more preferably up to 1/200, of the first or second nominal value of the DC bus voltage.

The control unit may further be configured, so as to measure the second average value of the duration of the switching period of the DC/DC converter at the second nominal value of the DC bus voltage, to: ramp the DC bus voltage from the first nominal value to the second nominal value in dependence of a time constant of the feedback control of the DC/DC converter.

The control unit may further be configured, so as to measure the second average value of the duration of the switching period of the DC/DC converter at the second nominal value of the DC bus voltage, to: ramp the DC bus voltage from the second nominal value back to the first nominal value in dependence of the time constant of the feedback control of the DC/DC converter.

The DC/DC converter may comprise a half-bridge resonant converter configured to provide the DC output current for the LED load in dependence of the DC bus voltage and the duration of the switching period of the DC/DC converter.

The driver may further comprise a power factor correcting, PFC, converter configured to provide the DC bus voltage for the DC/DC converter.

The control unit may comprise a proportional-integral feedback controller configured to perform the feedback control of the nominal duration of the switching period of the DC/DC converter.

A second aspect of the present disclosure relates to a lighting system. The lighting system comprises a driver according to any one of the preceding claims; and an LED load configured to be supplied by the driver.

## Advantageous Effects

The present disclosure provides a driver for an LED load which is capable of adaptive in-service adjustment of a feedforward gain to mitigate undesirable noise components and corresponding light flicker at every conceivable operating point of the driver.

**Brief Description of Drawings**

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1 illustrates a driver 1 for an LED load in accordance with the present disclosure; and

FIG. 2 illustrates a feedback control and a feedforward control in accordance with the present disclosure.

**Detailed Descriptions of Drawings**

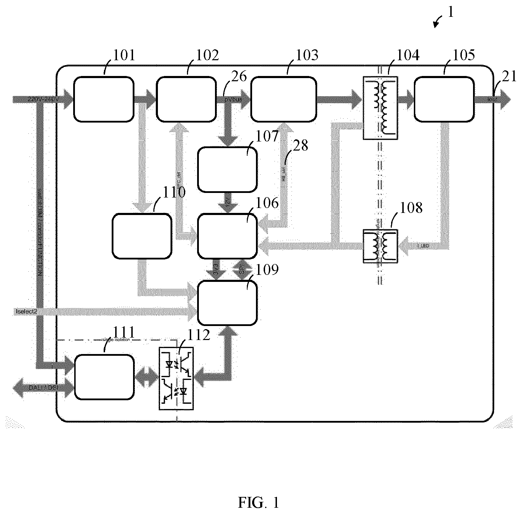

FIG. 1 illustrates a driver 1 for an LED load in accordance with the present disclosure.

The driver 1 comprises a DC/DC converter 103 configured to provide a DC output current 21, $I_{LED}$ for the LED load in dependence of a DC bus voltage 26, $V_{BUS}$ and a duration of a switching period 28, $T_{HB}$ of the DC/DC converter 103.

The DC/DC converter 103 may comprise a half-bridge (HB) resonant converter, which may in turn comprise a resonant tank circuit of LLC type, for example.

On an input side, the driver 1 of FIG. 1 may further comprise a power factor correction (PFC) converter 102, such as a boost converter, configured to provide the DC bus voltage 26, $V_{BUS}$ for the DC/DC converter 103, and a filter and rectifier circuitry 101 configured to filter electromagnetic noise and to rectify an AC mains input voltage at an input of the PFC converter 102.

On an output side, the driver 1 of FIG. 1 may further comprise an isolating transformer 104 and a subsequent rectifier and sensing circuitry 105 configured to provide, via a further isolating transformer 108, an indication of the DC output current 21, $I_{LED}$ for the LED load.

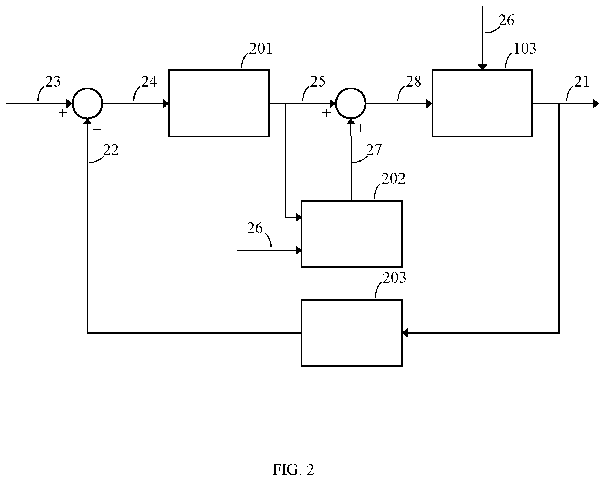

The driver 1 further comprises a control unit 106, 109 which will be explained in more detail in connection with FIG. 2 below. In the example of FIG. 1, the control unit 106, 109 includes an application-specific integrated circuit (ASIC) 106 and a microcontroller (μC) 109 and is supplied by a DC/DC converter 107. The μC

109 is configured to measure and detect an AC or DC mains input voltage by means of a mains detection circuitry 110.

FIG. 1 further shows a digital addressable lighting interface (DALI) unit 111 interconnected with the control unit 106, 109 by means of optocouplers 112. The DALI unit 111 may receive dimming commands for varying an operating point of the DC/DC converter 103.

FIG. 2 illustrates a feedback control and a feedforward control in accordance with the present disclosure.

The control unit 106, 109 is configured to perform a feedback control of a nominal duration of the switching period 25, $T_{HB\_ctrl}$ of the DC/DC converter 103 in dependence of a target value 23, $I_{LED\_avg\_target}$ for the DC output current 21, $I_{LED}$.

To that end, a feedback controller 201 such as a proportional-integral (PI) feedback controller provides the nominal duration of the switching period 25, $T_{HB\_ctrl}$ in dependence of a feedback control error between the target value 23, $I_{LED\_avg\_target}$ for the DC output current 21, $I_{LED}$ and an indication 22, $I_{LED\_avg}$ of the DC output current 21, $I_{LED}$. According to FIG.2, the indication 22, $I_{LED\_avg}$ may be provided by an LED current sensing unit 203 implemented by the rectifier and sensing circuitry 105 as well as by the sensing transformer 108 of FIG. 1. Depending on the implementation, the target value 23, $I_{LED\_avg\_target}$ and the indication 22 may comprise analog or digital values.

Without a feedforward control of the duration of the switching period 28, $T_{HB}$ of the DC/DC converter 103, the duration of the switching period 28, $T_{HB}$ of the DC/DC converter 103 corresponds to the nominal duration of the switching period 25, $T_{HB\_ctrl}$. In such a configuration, noise components picked up by the DC bus voltage 26, $V_{BUS}$ translate into corresponding noise components of the DC output current 21, $I_{LED}$ and thus into light flicker issues.

To mitigate such noise components in the DC output current 21, $I_{LED}$, the control unit 106, 109 is further configured to perform said feedforward control of the duration of the switching period 28, $T_{HB}$ of the DC/DC converter 103 in dependence of the nominal duration of the switching period 25, $T_{HB\_ctrl}$, the DC bus voltage 26, $V_{BUS}$ and a feedforward gain $\Delta T_{HB}/\Delta V_{BUS}$. For said feedforward control, a feedforward controller 202 is provided.

The control unit 106, 109 is further configured to determine the feedforward gain $\Delta T_{HB}/\Delta V_{BUS}$ by a variation of the DC bus voltage 26, $V_{BUS}$, and may further be configured to determine the feedforward gain $\Delta T_{HB}/\Delta V_{BUS}$ by a variation of the DC bus voltage 26, $V_{BUS}$ in response to a variation of the target value 23, $I_{LED\_avg\_target}$ for the output current 21, $I_{LED\_avg}$. This variation of the target value 23, $I_{LED\_avg\_target}$ may be caused by dimming commands, for example.

More specifically, to determine the feedforward gain $\Delta T_{HB}/\Delta V_{BUS}$ by the variation of the DC bus voltage 26, $V_{BUS}$, the control unit 106, 109 may further be configured to:

- disable feedforward control of the duration of the switching period 28, $T_{HB}$ (i.e., disable the feedforward controller 202) while determining the feedforward gain $\Delta T_{HB}/\Delta V_{BUS}$ (see next);
- measure a first average value $T_{HB1}$ of the duration of the switching period 28, $T_{HB}$ of the DC/DC converter 103 at a first nominal value $V_{BUS}$ of the DC bus voltage 26, $V_{BUS}$ over a given plurality of the duration of the switching period 28, $T_{HB}$;
- measure a second average value $T_{HB2}$ of the duration of the switching period 28, $T_{HB}$ of the DC/DC converter 103 at a second nominal value $V_{BUS2}$ of the DC bus voltage 26, $V_{BUS}$ that differs from the first nominal value $V_{BUS1}$ over the given plurality of the duration of the switching periods 28, $T_{HB}$; and
- determine the feedforward gain $\Delta T_{HB}/\Delta V_{BUS}$ as a differential quotient of the difference of the first and second average values $\Delta T_{HB}$ of the duration of the switching period 28, $T_{HB}$ and the difference of the first and second nominal values $\Delta V_{BUS}$ of the DC bus voltage 26, $V_{BUS}$:

$$\frac{\Delta T_{HB}}{\Delta V_{BUS}} = \frac{T_{HB2} - T_{HB1}}{V_{BUS2} - V_{BUS1}}$$

In particular, the second nominal value $V_{BUS2}$ of the DC bus voltage 26, $V_{BUS}$ may be greater or less than the first nominal value $V_{BUS}$ of the DC bus voltage 26, $V_{BUS}$. The difference of the first and second nominal values $\Delta V_{BUS}$ of the DC bus voltage 26, $V_{BUS}$ may comprise up to 1/80, and more preferably up to 1/200, of the nominal values $V_{BUS1}$, $V_{BUS2}$ of the DC bus voltage 26, $V_{BUS}$. As an example, for $V_{BUS} = 400V$, $\Delta V_{BUS}$ may comprise up to 5V and more preferably up to 2V. In other words, a magnitude of $\Delta V_{BUS}$ is small relative to the magnitudes of the nominal values $V_{BUS1}$, $V_{BUS2}$, so that a resulting variation of the illumination is kept small.

To mitigate the resulting variation of the illumination even more, the control unit 106, 109 may further be configured, so as to measure the second average value $T_{HB2}$ of the duration of the switching period 28, $T_{HB}$ of the DC/DC converter 103 at the second nominal value $V_{BUS2}$ of the DC bus voltage 26, $V_{BUS}$, to: ramp the DC bus voltage 26, $V_{BUS}$ from the first nominal value $V_{BUS}$ to the second nominal value $V_{BUS2}$ in dependence of a time constant of the feedback control of the DC/DC converter 103.

In other words, a slope of the ramp of the DC bus voltage 26, $V_{BUS}$ is small enough as to enable the feedback control of the DC/DC converter 103 to correct the control error that emerges due to the changing DC bus voltage 26, $V_{BUS}$ without producing a time lag or overswings.

The same may apply in a reverse direction of the variation of the DC bus voltage 26, $V_{BUS}$, as the control unit 106, 109 may further be configured, so as to measure the second average value $T_{HB2}$ of the duration of the switching period 28, $T_{HB}$ of the DC/DC converter 103 at the second nominal value $V_{BUS2}$ of the DC bus voltage 26, $V_{BUS}$, to: ramp the DC bus voltage 26, $V_{BUS}$ from the second nominal value $V_{BUS2}$ back to the first nominal value $V_{BUS}$ in dependence of the time constant of the feedback control of the DC/DC converter 103.

When the feedforward control of the duration of the switching period 28, $T_{HB}$ of the DC/DC converter 103 is used in addition to the feedback control, the duration of the switching period 28, $T_{HB}$ of the DC/DC converter 103 corresponds to a sum of the nominal duration of the switching period 25, $T_{HB\_ctrl}$ and an adjustment value 27, $T_{HB\_fefo}$ that depends on the determined feedforward gain $\Delta T_{HB}/\Delta V_{BUS}$ and the noise components picked up by the DC bus voltage 26, expressed as a difference between the instantaneous DC bus voltage 26, $V_{BUS}$ and the nominal DC bus voltage 26, $V_{BUS\_nom}$:

$$T_{HB} = T_{HB\_ctrl} + T_{HB\_fefo}$$

$$T_{HB\_fefo} = \frac{\Delta T_{HB}}{\Delta V_{BUS}} \cdot \left( V_{BUS} - V_{BUS\_nom} \right)$$

In such a configuration, a translation of the noise components picked up by the DC bus voltage 26, $V_{BUS}$ into corresponding noise components of the DC output current 21, $I_{LED}$ and thus into light flicker issues is effectively minimized.

## Claims

1. A driver (1) for an LED load, comprising

   a DC/DC converter (103) configured to provide a DC output current (21, $I_{LED}$) for the LED load in dependence of a DC bus voltage (26, $V_{BUS}$) and a duration of a switching period (28, $T_{HB}$) of the DC/DC converter (103); and
   a control unit (106, 109) configured to

   perform a feedback control of a nominal duration of the switching period (25, $T_{HB\_ctrl}$) of the DC/DC converter (103) in dependence of a target value (23, $I_{LED\_avg\_target}$) for the DC output current (21, $I_{LED\_avg}$);
   perform a feedforward control of the duration of the switching period (28, $T_{HB}$) of the DC/DC converter (103) in dependence of the nominal duration of the switching period (25, $T_{HB\_ctrl}$), the DC bus voltage (26, $V_{BUS}$) and a feedforward gain ($\Delta T_{HB}/\Delta V_{BUS}$); and
   determine the feedforward gain ($\Delta T_{HB}/\Delta V_{BUS}$) by a variation of the DC bus voltage (26, $V_{BUS}$).

**2.** The driver (1) of claim 1,
wherein the control unit (106, 109) is further configured, so as to determine the feedforward gain ($\Delta T_{HB}/\Delta V_{BUS}$) by the variation of the DC bus voltage (26, $V_{BUS}$), to:
determine the feedforward gain ($\Delta T_{HB}/\Delta V_{BUS}$) by a variation of the DC bus voltage (26, $V_{BUS}$) in response to a variation of the target value (23, $I_{LED\_avg\_target}$) for the output current (21, $I_{LED\_avg}$).

**3.** The driver (1) of claim 1 or claim 2,
wherein the control unit (106, 109) is further configured, so as to determine the feedforward gain ($\Delta T_{HB}/\Delta V_{BUS}$) by the variation of the DC bus voltage (26, $V_{BUS}$), to:

measure a first average value ($T_{HB1}$) of the duration of the switching period (28, $T_{HB}$) of the DC/DC converter (103) at a first nominal value ($V_{BUS1}$) of the DC bus voltage (26, $V_{BUS}$) over a given plurality of the duration of the switching period (28, $T_{HB}$);
measure a second average value ($T_{HB2}$) of the duration of the switching period (28, $T_{HB}$) of the DC/DC converter (103) at a second nominal value ($V_{BUS2}$) of the DC bus voltage (26, $V_{BUS}$) that differs from the first nominal value ($V_{BUS1}$) over the given plurality of the duration of the switching periods (28, $T_{HB}$); and
determine the feedforward gain ($\Delta T_{HB}/\Delta V_{BUS}$) as a differential quotient of the difference of the first and second average values ($\Delta T_{HB} = T_{HB2} - T_{HB1}$) of the duration of the switching period (28, $T_{HB}$) and the difference of the first and second nominal values ($\Delta V_{BUS} = V_{BUS2} - V_{BUS1}$) of the DC bus voltage (26, $V_{BUS}$).

**4.** The driver (1) of claim 3,
wherein the difference of the first and second nominal values ($\Delta V_{BUS}$) of the DC bus voltage (26, $V_{BUS}$) comprises up to 1/80, and more preferably up to 1/200, of the first or second nominal value ($V_{BUS1}$, $V_{BUS2}$) of the DC bus voltage (26, $V_{BUS}$).

**5.** The driver (1) of claim 3 or claim 4,
wherein the control unit (106, 109) is further configured, so as to measure the second average value ($T_{HB2}$) of the duration of the switching period (28, $T_{HB}$) of the DC/DC converter (103) at the second nominal value ($V_{BUS2}$) of the DC bus voltage (26, $V_{BUS}$), to:
ramp the DC bus voltage (26, $V_{BUS}$) from the first nominal value ($V_{BUS1}$) to the second nominal value ($V_{BUS2}$) in dependence of a time constant of the feedback control of the DC/DC converter (103).

**6.** The driver (1) of any one of the claims 3 to 5,
wherein the control unit (106, 109) is further configured, so as to measure the second average value ($T_{HB2}$) of the duration of the switching period (28, $T_{HB}$) of the DC/DC converter (103) at the second nominal value ($V_{BUS2}$) of the DC bus voltage (26, $V_{BUS}$), to:
ramp the DC bus voltage (26, $V_{BUS}$) from the second nominal value ($V_{BUS2}$) back to the first nominal value ($V_{BUS1}$) in dependence of the time constant of the feedback control of the DC/DC converter (103).

**7.** The driver (1) of any one of the preceding claims,
wherein the DC/DC converter (103) comprises a half-bridge resonant converter configured to provide the DC output current (21, $I_{LED}$) for the LED load in dependence of the DC bus voltage (26, $V_{BUS}$) and the duration of the switching period (28, $T_{HB}$) of the DC/DC converter (103).

**8.** The driver (1) of any one of the preceding claims,
wherein the driver (1) further comprises a power factor correcting, PFC, converter (102) configured to provide the DC bus voltage (26, $V_{BUS}$) for the DC/DC converter (103).

**9.** The driver (1) of any one of the preceding claims,
wherein the control unit (106, 109) comprises a proportional-integral (PI) feedback controller (201) configured to
perform the feedback control of the nominal duration of the switching period (25, $T_{HB\_ctrl}$) of the DC/DC converter (103).

**10.** A lighting system, comprising

a driver (1) according to any one of the preceding claims; and
an LED load configured to be supplied by the driver (1).

FIG. 1

FIG. 2

Europäisches
Patentamt

European
Patent Office

Office européen
des brevets

# EUROPEAN SEARCH REPORT

Application Number

EP 21 16 6892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/009243 A1 (TRIDONIC GMBH & CO KG [AT]) 21 January 2021 (2021-01-21) * page 1, line 5 - page 20, line 24; figures 1-11 * | 1,7,9,10 | INV. H05B45/325 H05B45/382 H05B45/345 H05B45/14 |
| X | US 2019/245451 A1 (SAGNERI ANTHONY [US] ET AL) 8 August 2019 (2019-08-08) * paragraphs [0082] - [0099]; figures 3A-3I * | 1,2,7,9 | H05B45/39 H02M1/00 |
| X | US 2018/092179 A1 (GUO YUE [CN] ET AL) 29 March 2018 (2018-03-29) * paragraphs [0012] - [0018], [0041] - [0047]; figures 5-7 * | 1,8-10 | |
| X | US 2016/295657 A1 (SUZUKI MOTOAKI [JP] ET AL) 6 October 2016 (2016-10-06) * paragraphs [0021] - [0060]; figures 1-10 * | 1,8-10 | |

TECHNICAL FIELDS SEARCHED (IPC)

H02M
H05B
G05F

The present search report has been drawn up for all claims

| Place of search | Date of completion of the search | Examiner |
|---|---|---|
| Munich | 18 October 2021 | Ferla, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 6892

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2021

| Patent document cited in search report | | Publication date | Patent family member(s) | | Publication date |
|---|---|---|---|---|---|
| WO 2021009243 | A1 | 21-01-2021 | EP | 3767811 A1 | 20-01-2021 |
| | | | WO | 2021009243 A1 | 21-01-2021 |
| US 2019245451 | A1 | 08-08-2019 | US | 2019245451 A1 | 08-08-2019 |
| | | | WO | 2018031757 A1 | 15-02-2018 |
| US 2018092179 | A1 | 29-03-2018 | CN | 107683630 A | 09-02-2018 |
| | | | EP | 3286987 A1 | 28-02-2018 |
| | | | HK | 1250870 A1 | 11-01-2019 |
| | | | US | 2018092179 A1 | 29-03-2018 |
| | | | WO | 2016169022 A1 | 27-10-2016 |
| US 2016295657 | A1 | 06-10-2016 | CN | 106028496 A | 12-10-2016 |
| | | | JP | 6605829 B2 | 13-11-2019 |
| | | | JP | 2016192292 A | 10-11-2016 |
| | | | US | 2016295657 A1 | 06-10-2016 |

EPO FORM P0459

For more details about this annex : see Official Journal of the European Patent Office, No. 12/82